# FASCICULE DE BREVET EUROPEEN

(11) **EP 1 643 279 B1**
(45) Date de publication et mention de la délivrance du brevet: **24.02.2010**
(21) Numéro de dépôt: 05291906.5
(22) Date de dépôt: 15.09.2005
(51) Int. Cl.: F21V 21/34, F21W 131/405

(54) **Système universel à fibres optiques pour éclairage de vitrines de musées**
Universelles System mit optischen Fasern zur Beleuchtung einer Vitrine eines Museums
Universal system using optical fibers for lighting museum showcase

(30) Priorité: 29.09.2004 FR 0410292
(43) Date de publication de la demande: 05.04.2006
(73) Titulaire: Luxam Europe Sarl, 95520 Osny (FR)
(72) Inventeur: Desvallées, Eric, 27830 Neaufles Saint Martin (FR); Sauvage, Bruno, 78420 Carrières sur Seine (FR); Hocquard, Jean François, Coral Gables, FL 33134 (US)

(56) Documents cités:
- WO-A-98/51963
- DE-A1- 19 946 691
- GB-A- 836 163
- US-A- 4 530 036
- US-A- 5 325 272
- US-A- 5 398 177
- US-A- 5 833 358
- US-A- 6 033 097
- US-A- 6 126 305

## Description

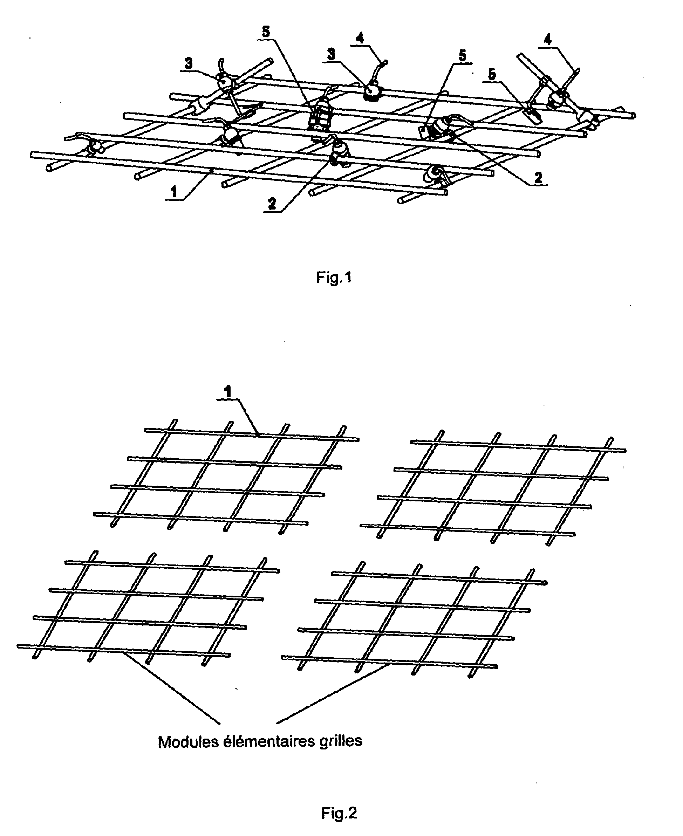

La présente invention représentée en figure 1 concerne un système complet, pour l'éclairage de vitrines de Musées, utilisant l'apport de flux lumineux par fibres optiques. Généralement, l'éclairage de vitrines est réalisé par réglettes fluorescentes, ou sources de lumière ponctuelles encastrées en plafond, fixées dessus ou encore placées sur rails électriques comme décrit dans le document WO 98/51963 qui représente l'état de la technique. Ces dispositifs ne sont pas totalement adaptés à la mise en valeur d'objets en présentation qui par leur diversité de taille, forme, matière, situation, nécessitent une grande variété de solutions pour leur éclairage.

Le dispositif selon l'invention remplace le support rail par des segments de grille en offrant une solution globale qui comprend : une grille support (1) à mailles régulières installée en plafond, sur laquelle sont fixés par l'intermédiaire de pinces (2) , des terminaux de fibres optiques (3) (reliés aux fibres (4)). Ces terminaux (3) peuvent recevoir des accessoires très variés (5) qui permettent d'obtenir la mise en lumière souhaitée pour chaque objet. Ils sont placés avec précision sur le segment de grille qui convient pour le meilleur angle d'attaque du faisceau lumineux.
Si le contenu de la vitrine change, la disposition des appareils ou terminaux optiques (3) est facile à modifier, ou leur remplacement par d'autres modèles, facile à réaliser.
De part la conception hyper modulable du système et selon l'évolution du contenu de la vitrine, il est ainsi très facile d'ajouter ou de retirer des appareils.

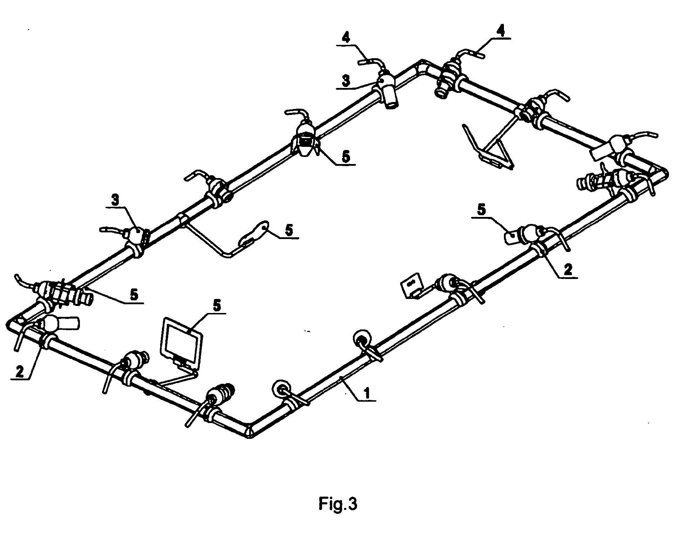

Selon des modes particuliers de réalisation, la grille (1) peut être constituée de deux réseaux de barreaux parallèles entrecroisés formant un quadrillage. L'angle entre les barreaux des deux réseaux parallèles peut être de 90° ou moins. La grille (1) peut être aussi plus simplement composée d'un seul cadre (figure 3). La grille (1) peut être également une composition de plusieurs modules unitaires de grilles juxtaposés côte à côte (figure 2).

L'assemblage des barreaux peut se faire par soudure ou par des pièces mécaniques de couplage. La section des barreaux peut être cylindrique et leur diamètre compris entre 5mm et 13mm. Les barreaux peuvent être superposés ou bien assemblés dans le même plan.

Les terminaux miniatures (3) sont fixés sur la grille (1) par l'intermédiaire de pinces (2) et ont ainsi la liberté de coulisser longitudinalement le long des barreaux de celle-ci.

Les terminaux miniatures (3) bénéficient d'une orientation à 360° sur 2 axes perpendiculaires. Ils peuvent recevoir des accessoires (5) tels que tubes réducteurs de flux et anti-éblouissement, volets coupe-flux, objectifs optiques pour modification de faisceau, systèmes de cadrage, porte-gobos, porte-verres dépolis, filtres de couleur ou tamis, suspente-rallonge flexible ou rigide...

L'ensemble de l'invention est représenté en figure 1

Selon une variante illustrée en figure 2, Le support grille (1) peut consister en modules élémentaires assemblés, couvrant la surface du plafond.

Selon une autre variante illustrée en figure 3, le support grille (1) est simplifié en un cadre , suffisant dans un certain nombre de cas pour la mise en lumière des objets.

## Revendications

1. Dispositif complet pour éclairage de vitrine de musées au moyen de fibres optiques, **caractérisé en ce qu'**il comprend une grille support à mailles régulières carrées ou losanges constituée de barreaux , apte à être placée en plafond de vitrine et des terminaux miniatures (3) pour fibres optiques (4), ces derniers étant fixés sur la grille support par des pinces conçues pour coulisser (2) le long des segments de barreaux et étant placés avec précision sur ceux qui conviennent pour les meilleurs angles d'attaque des faisceaux lumineux, chaque appareil (3) pouvant être équipé d'accessoires (5) tels que tubes réducteurs de flux et anti-éblouissement, volets coupe-flux, objectifs optique pour modification de faisceau, systèmes de cadrage, porte-gobos, porte- verres dépolis, filtres de couleur ou tamis, suspente- rallonge flexible ou rigide.

2. Dispositif selon la revendication 1, **caractérisé en ce que** la grille support (1) résulte de l'assemblage de modules unitaires de grilles, et est apte à couvrir la surface du plafond (fig 2).

3. Dispositif selon la revendication 1, **caractérisé en ce que** le support (1) est constitué d'un simple cadre rectangle ou carré, suffisant dans un certain nombre de cas pour la mise en lumière des objets en vitrine.

4. Dispositif selon la revendication 1, **caractérisé en ce que** la section des barreaux composant le support (1) est cylindrique.

5. Dispositif selon la revendication 1, **caractérisé en ce que** la section des barreaux composant le support (1) est d'un diamètre compris entre 5 mm et 13mm.

6. Dispositif selon la revendication 1, **caractérisé en ce que** les barreaux composant le support (1) sont assemblés par soudure ou tout dispositif mécanique de couplage.

7. Dispositif selon la revendication 1, **caractérisé en ce que** les deux réseaux de barreaux entrecroisés et formant le maillage de la grille support (1) sont assemblés dans le même plan.

8. Dispositif selon la revendication 1, **caractérisé en ce que** la pince (2) de fixation des terminaux miniatures à fibres optiques (3) peut coulisser longitudinalement le long des barreaux du support sans l'usage d'un outil.

9. Dispositif selon la revendication 1, **caractérisé en ce que** la pince (2) de fixation des terminaux miniatures à fibres optiques (3) peut se clipper sur les barreaux du support.

## Claims

1. A full device for museum display case lighting using fiber optics, **characterized in that** it comprises a square or diamond-shaped grid support made from bars, capable of being placed in the ceiling of the display case, and miniature terminals (3) for fiber optics (4), the terminals being attached to the support grid by clips designed to slide (2) along segments of bars and being precisely on those that allow the best light beam angles, each device (3) being possibly equipped with accessories (5) such as anti-glare and flow reducing tubes, barn doors, optical lenses for altering beams of light, framing systems, a gobo carrier, an etched glass carrier, screens or color filters, or a flexible or rigid extension line.

2. A device according to claim 1, **characterized in that** the support grid (1) is the result of assembling unitary grid modules and is capable of covering the surface of the ceiling (fig 2).

3. A device according to claim 1, **characterized in that** the support (1) consists of a simple rectangular or square frame, in a sufficient number of cases to light the objects in the display case.

4. A device according to claim 1, **characterized in that** the section of bars forming the support (1) is cylindrical.

5. A device according to claim 1, **characterized in that** the section of bars forming the support (1) has a diameter of between 5 mm and 13 mm.

6. A device according to claim 1, **characterized in that** the bars forming the support (1) are assembled by soldering or any mechanical coupling device.

7. A device according to claim 1, **characterized in that** the two networks of intersecting bars forming the mesh of the support grid (1) are assembled on the same plane.

8. A device according to claim 1, **characterized in that** the clip (2) holding the miniature terminals to the fiber optics (3) can slide longitudinally along the support bars without the use of a tool.

9. A device according to claim 1, **characterized in that** the clip (2) holding the miniature terminals to the fiber optics (3) can be clipped to the support bars.

## Patentansprüche

1. Vollständige Vorrichtung zur Ausleuchtung von Museumsvitrinen durch Lichtwellenleiter, **dadurch gekennzeichnet, dass** sie ein Haltegitter mit regelmäßigen quadratischen oder rautenförmigen Maschen bestehend aus Stäben enthält, das an der Decke der Vitrine angebracht werden kann, sowie Miniaturterminals (3) für Lichtwellenleiter (4), wobei letztere durch Klemmen auf dem Haltegitter befestigt werden können, die derart gestaltet sind, dass sie entlang der Stabsegmente gleiten (2) können und die präzise auf jenen angeordnet sind, die für die besten Anstellwinkel der Lichtstrahlen geeignet sind, wobei jedes Gerät (3) mit Zubehörteilen (5), wie Reduzierungsrohren und Blendschutzen, Torblenden, optischen Objektiven zur Veränderung des Lichtstrahls, Einstellsystemen, Gobohaltern, Milchglasscheibenhaltern, Farbfiltern oder Weichzeichnern, festen oder flexiblen Hängegestängen und Verlängerungen ausgestattet werden kann.

2. Vorrichtung nach Anspruch 1, **dadurch gekennzeichnet, dass** das Haltegitter (1) durch die Zusammensetzung von einzelnen Gittermodulen entsteht, und es in der Lage ist, die Deckenfläche (Abb.2) abzudecken.

3. Vorrichtung nach Anspruch 1, **dadurch gekennzeichnet, dass** die Halterung (1) aus einem einzelnen rechteckigen oder quadratischen Rahmen besteht, der in manchen Fällen für die Ausleuchtung der Gegenstände in der Vitrine ausreicht.

4. Vorrichtung nach Anspruch 1, **dadurch gekennzeichnet, dass** der Querschnitt der Stäbe, aus denen die Halterung (1) besteht, zylindrisch ist.

5. Vorrichtung nach Anspruch 1, **dadurch gekennzeichnet, dass** der Querschnitt der Stäbe, aus denen die Halterung (1) besteht, einen Durchmesser zwischen 5mm und 13mm aufweist.

6. Vorrichtung nach Anspruch 1, **dadurch gekennzeichnet, dass** die Stäbe, aus denen sich die Halterung (1) zusammensetzt, durch Verschweißen oder durch mechanische Verbindungsvorrichtungen zusammengesetzt werden.

7. Vorrichtung nach Anspruch 1, **dadurch gekennzeichnet, dass** die beiden Stabnetze, die einander kreuzen, und die so die Maschen des Haltegitters (1) bilden, auf derselben Ebene zusammengesetzt werden.

8. Vorrichtung nach Anspruch 1, **dadurch gekennzeichnet, dass** die Befestigungsklemme der Miniterminals der Lichtwellenleiter (3) ohne Verwendung eines Werkzeugs in Längsrichtung entlang der Stäbe der Halterung gleiten kann.

9. Vorrichtung nach Anspruch 1, **dadurch gekennzeichnet, dass** die Befestigungsklemme der Miniterminals der Lichtwellenleiter (3) auf die Stäbe der Halterung geklippt werden kann.
